# EUROPÄISCHE PATENTANMELDUNG

(11) **EP 3 620 067 A1**
(43) Veröffentlichungstag der Anmeldung: **11.03.2020**
(21) Anmeldenummer: 19195142.5
(22) Anmeldetag: 03.09.2019
(51) Int. Cl.: A23P 30/00, B01F 11/00

(54) **MISCH- UND KNETVERFAHREN**

(30) Priorität: 05.09.2018 DE 102018215084
(71) Anmelder: Hukelmann, Bernhard, 49610 Quakenbrück (DE)
(72) Erfinder: Hukelmann, Bernhard, 49610 Quakenbrück (DE)
(74) Vertreter: Taruttis, Stefan Georg

(57) **Zusammenfassung**

Verfahren zum Herstellen einer Masse, die eine homogene Phase aufweist, die optional darin verteilt Stücke und/oder Gasblasen enthält, oder daraus besteht, durch Mischen einer anfänglichen Zusammensetzung in einem Behälter, der in eine Lissajou-Bewegung versetzt wird. Die homogene Phase ist bevorzugt in der Masse durchgehend bzw. kontinuierlich, optional mit darin verteilten Stücken und/oder Gasblasen. Die anfängliche Zusammensetzung weist zumindest ein Polymer und einen weiteren Bestandteil auf, zumindest ein Bestandteil ist flüssig.

## Beschreibung

Die vorliegende Erfindung betrifft ein Verfahren zum Herstellen einer Masse, die eine homogene Phase aufweist, optional darin verteilt Stücke und/oder Gasblasen enthält, oder daraus besteht, durch Mischen und/oder Kneten einer anfänglichen Zusammensetzung. Das Verfahren kann satzweise oder kontinuierlich ablaufen, jeweils optional mit kontinuierlicher, bevorzugt satzweiser Zuführung der anfänglichen Zusammensetzung. Die homogene Phase ist bevorzugt in der Masse durchgehend bzw. kontinuierlich, optional mit darin verteilten Stücken und/oder Gasblasen. Bevorzugt besteht die Masse aus einer durchgehenden bzw. kontinuierlichen homogenen Phase, mit optional darin verteilten Stücken und/oder Gasblasen, oder die Masse besteht aus der homogenen Phase. Die homogene Phase der Masse weist bevorzugt zumindest ein Polymer und einen weiteren Bestandteil der anfänglichen Zusammensetzung auf oder besteht daraus, von denen optional in der anfänglichen Zusammensetzung zumindest einer pulverförmig und zumindest einer flüssig ist, oder die alle flüssig sind. Die homogene Phase ist bevorzugt vernetzbar bzw. härtbar und/oder duroplastisch.

Das Verfahren hat den Vorteil, eine Durchmischung zu einer homogenen Phase in kurzer Zeit zu erreichen. Bei härtenden Massen, z.B. selbsthärtenden Kunststoffmischungen, die z.B. polymerisierbare Monomeren und Polymerisationsstarter enthalten, ergibt sich durch die kurze Zeit zum Herstellen der Masse eine längere verfügbare Topfzeit bzw. Verarbeitungszeit.

Generell bevorzugt ist die Masse ein Teig auf Basis von Stärke, optional Protein, optional Fett und Wasser, so dass die homogene kontinuierliche Phase gebildet ist, die mit Wasser gequollene Stärke und/oder mit Wasser versetztes Protein, optional Fett, Salz, Backtriebmittel, Aroma- und Farbstoffe, enthält oder daraus besteht, z.B. Teig auf Basis von Mehl. In der homogenen Phase können Stücke und/oder Gasblasen enthalten sein. Alternativ kann die Masse aus der homogenen Phase bestehen, so dass die Masse bzw. die homogene Phase keine Gasblasen einschließt.

Für Polymere, die Lebensmittel sind, sind die Stücke stückige Lebensmittel, z.B. Getreidekörner, Schokolade, Pflanzenteile, z.B. Nüsse, Früchte, Fruchtbestandteile, Rosinen etc.

Optional kann die anfängliche Zusammensetzung zugesetztes Gas enthalten, z.B. CO₂, Stickstoff, ein Stickoxid (insbesondere NO oder N₂O), gasförmig unter Druck, fest oder flüssig.

Bevorzugt weist das Verfahren im Anschluß an das Mischen der anfänglichen Zusammensetzung bzw. an die Herstellung der Masse aus der anfänglichen Zusammensetzung einen Schritt des Formens der Masse und des Härtens bzw. Vernetzens der Masse auf, z.B. durch Erwärmen. Im Falle von Teig auf Basis von Mehl als Polymer kann das Erwärmen auch als Backen bezeichnet werden.

### Stand der Technik

Es ist bekannt, eine homogene Masse aus einer anfänglichen Zusammensetzung ihrer Bestandteilen durch Mischen und Kneten in einem Behälter herzustellen, in dem ein motorisch angetriebener Rührer angeordnet ist, oder mittels eines Extruders oder durch Pumpen durch eine Leitung, in der ein statischer Mischer angebracht ist.

Die WO 2015/114118 A1 beschreibt die Behandlung von rohem Fleisch zu dessen Auflockerung, zum Verkleben und/oder zum Einbringen von Salz und Marinade in einem Behälter, bei dem eine Wand oder der ganze Behälter zu einer Hin- und Herbewegung angetrieben wird, bevorzugt der ganze Behälter entlang zweier Achsen mit jeweils unterschiedlicher Frequenz.

### Aufgabe der Erfindung

Der Erfindung stellt sich die Aufgabe, ein alternatives Verfahren zum Mischen oder Kneten bereitzustellen, mit dem Massen hergestellt werden können, die eine homogene Phase aufweisen, die bevorzugt durch die gesamte Masse kontinuierlich ist.

### Beschreibung der Erfindung

Die Erfindung löst die Aufgabe mit den Merkmalen der Ansprüche, insbesondere mit einem Verfahren zur Herstellung einer Masse, die eine durchgehende homogene Phase aufweist, aus einer anfänglichen Zusammensetzung, das die Schritte
- Dosieren der Bestandteile der anfänglichen Zusammensetzung für die Masse in einen Behälter,
- wobei homogene Phase aus den Bestandteilen der anfänglichen Zusammensetzung erzeugt wird, die
   zumindest ein Polymer, das bevorzugt ein natürliches Polymer ist, z.B. Stärke und/oder Protein, und einen weiteren Bestandteil, wobei zumindest eines von Polymer und dem weiteren Bestandteil flüssig ist,
   oder Monomeren oder Oligomeren, die optional polymerisierbar und/oder vernetzbar sein können, z.B. vernetzbares Oligomer und/oder vernetzbares Polymer, optional mit einem Vernetzungsmittel und/oder Polymerisationsstarter,
   umfassen oder daraus bestehen,
- Bewegen des Behälters in einer Ebene entlang zweier Bewegungsachsen, vorliegend auch als Achsen bezeichnet, z.B. in einer Hin- und Herbewegung, mit einer Frequenz von zumindest 1 Hz mit jeweils unterschiedlicher Frequenz entlang jeder Achse und über einen Weg entlang jeder Achse von zumindest 1 cm, bevorzugt zumindest 10 cm, wobei optional die Phasenlage der Bewegung entlang der Achsen zueinander veränderbar ist, insbesondere die Phasenlage über die Dauer der Bewegung verändert wird, zur Herstellung einer Masse, die die homogene Phase mit optional darin verteilten Stücken und/oder Gasblasen aufweist,
- optional Entnehmen der Masse aus dem Behälter,
- optional Formen der Masse,
- optional Härten der Masse, insbesondere durch Erwärmen
umfasst oder daraus besteht.

Optional enthält die homogene Phase darin verteilte Gasblasen, so dass z.B. die Masse aus zumindest 70 Vol.-% homogener Phase, zumindest 80 Vol.-%, zumindest 90 Vol.-% oder zumindest 95 Vol.-% oder zumindest 99 Vol.-% homogener Phase besteht, wobei der verbleibende Volumenanteil der Masse Gasblasen sind, wobei die Volumenanteile innerhalb des Behälters vorliegen können und/oder bevorzugt die Volumenanteile unmittelbar nach Entnahme der Masse aus dem Behälter vorliegen. Wenn die anfängliche Zusammensetzung Treibmittel enthält, z.B. Backtriebmittel, insbesondere Hefe, kann der Gasanteil nach Entnahme aus dem Behälter weiter ansteigen, z.B. während des Formens und/oder während des Härtens der Masse, z.B. durch Erwärmung. Weiter optional können der Masse Stücke zugesetzt sein, die sich nicht homogen mit der homogenen Phase verbinden, z.B. zu maximal 10 Vol.-%, zu maximal 5 Vol.-%, zu maximal 2 Vol.-%, oder die Masse weist keine zugesetzten Stücke auf.

Die optional in der homogenen Phase verteilten Stücke können der anfänglichen Zusammensetzung zugesetzt werden oder können Herstellen der Masse, die durch Bewegen des Behälters aus einer homogenen Phase besteht, zugesetzt werden und z.B. durch erneutes Bewegen des Behälters entlang zweier Bewegungsachsen in die homogene Phase eingemischt werden. Gasblasen können durch Treibmittel oder Gas in der anfänglichen Zusammensetzung erzeugt werden.

In dem Verfahren werden die Bestandteile der anfänglichen Zusammensetzung, die bevorzugt zumindest ein Polymer, das bevorzugt ein natürliches Polymer ist, z.B. Stärke und/oder Protein, und einen weiteren Bestandteil, wobei zumindest eines von Polymer und dem weiteren Bestandteil flüssig ist, umfassen oder daraus bestehen, und das Bewegen des Behälters in einer Hin- und Herbewegung mit einer Frequenz von zumindest 1 Hz entlang zweier Achsen mit jeweils unterschiedlicher Frequenz über einen Weg entlang jeder Achse von zumindest 2 cm oder zumindest 5 cm oder zumindest 10 cm die Masse hergestellt, die die homogene Phase aufweist, die mit oder aus dem zumindest einen Polymer und dem zumindest einen weiteren Bestandteil gebildet ist, mit optional darin verteilten Stücken und/oder Gasblasen. Die homogene Phase durchzieht die gesamte Masse und bildet deren Struktur mit optional darin eingeschlossenen Stücken und/oder Gasblasen. Die homogene Phase ist vorzugsweise hochviskos, z.B. wie Zuckermischungen, Karamell oder Schokolade oder wie ein Teig auf Mehlbasis, der ein Teig mit Treibmittel, z.B. ein Hefeteig oder Sauerteig, oder ein Teig ohne Treibmittel sein kann, wie z.B. Nudel- oder Strudelteig.

Alternativ können die Bestandteile der anfänglichen Zusammensetzung polymerisierbare Monomeren oder Oligomeren und/oder zumindest ein vernetzbares Oligomer und/oder vernetzbares Polymer, optional mit einem Vernetzungsmittel und/oder Polymerisationsstarter umfassen, wobei diese Bestandteile zu einer homogenen Phase gemischt werden können. Dabei wird das Polymer durch polymerisierbare Vorläuferverbindungen gebildet. Für die Zwecke der Erfindung kann generell auch eine aus der anfänglichen Zusammensetzung hergestellte Mischung eine homogene Phase bilden, wenn darin noch bereichsweise Partikel aus einzelnen Bestandteilen der anfänglichen Zusammensetzung enthalten sind, die bevorzugt durch Polymerisation oder Vernetzung eingebunden sind. Solche bereichsweisen Partikel können z.B. nicht gelierte Stärkekörner oder unzerkleinertes Polymer sein. Bevorzugt enthält die homogene Phase maximal 5 Gew.-%, bevorzugter maximal 4, maximal 3, maximal 2 oder maximal 1 Gew.-% Partikel aus einzelnen Bestandteilen der anfänglichen Zusammensetzung, wobei diese bevorzugt durch Polymerisation oder Vernetzung in die homogene Phase eingebunden sind

Das Mischen bzw. Kneten der anfänglichen Zusammensetzung erfolgt erfindungsgemäß durch das Bewegen des Behälters in einer Hin- und Herbewegung mit einer Frequenz von zumindest 1 Hz entlang zweier Achsen mit jeweils unterschiedlicher Frequenz über einen Weg entlang jeder Achse von bevorzugt zumindest 1cm, zumindest 2 cm oder zumindest 3 cm oder zumindest 10 cm, z.B. bis 50 cm, bis 30 cm, bis 20 oder, bei kürzeren Wegen, bis 10 cm.

Generell kann die Ebene entlang zweier Achsen als Hin- und Herbewegung des Behälters entlang zweier Bewegungsachsen erfolgen, die jeweils in einem Winkel aufeinander stehen, z.B. in 90°. Dabei ist bevorzugt, dass die Hin- und Herbewegung entlang jeder der Bewegungsachsen mit einer Frequenz von zumindest 1 Hz oder zumindest 2 Hz oder zumindest 3 Hz, bevorzugter zumindest 4 Hz oder zumindest 5 Hz, zumindest 6 Hz, zumindest 7 Hz, zumindest 8 Hz oder zumindest 9 Hz, zumindest 10 Hz oder zumindest 15 Hz, z.B. bis 50 Hz oder bis 20 Hz erfolgt. Bei der Ebene entlang zweier Achsen, auch als Hin- und Herbewegung entlang zweier Bewegungsachsen, wird der Behälter bevorzugt entlang einer Lissajousfigur bewegt. Dabei ist bevorzugt, dass die Ebene entlang zweier Achsen bzw. die Hin- und Herbewegung entlang zweier oder dreier Bewegungsachsen bei jeweils unterschiedlicher Frequenz erfolgt, z.B. mit einem Unterschied von 1 % oder von 5 % bis 50 % der Frequenzen relativ zur höheren Frequenz. Bei zwei Bewegungsachsen, die z.B. in 45°, bevorzugt in 90° zueinander stehen, kann entlang der ersten Bewegungsachse die Hin- und Herbewegung z.B. bei einer Frequenz von 5 Hz erfolgen und entlang der zweiten Bewegungsachse bei 0,1 bis 4,9 Hz, insbesondere von 4,1 bis 4,8 Hz.

Die Hin- und Herbewegung des Behälters kann sich beispielsweise über einen Weg von zumindest 1 cm, bevorzugter zumindest 2 cm oder zumindest 5 cm, zumindest 10 cm oder zumindest 15 cm z.B. bis 50 cm, bis 30 cm oder bis 20 cm erstrecken. Weiter bevorzugt ist die Hin- und Herbewegung des Behälters harmonisch. Die Hin- und Herbewegung des Behälters ist nicht-linear und kann sinusförmig, dreiecksförmig oder bogenförmig sein, bevorzugt entlang einer Lissajous-Figur verlaufen, die bevorzugt in der Ebene liegt, bzw. zweidimensional ist. Denn generell fördert eine nicht-lineare Bewegungsachse, vorzugsweise eine Hin- und Herbewegung entlang einer Lissajous-Figur, eine gleichmäßige und intensive Durchmischung, auch bei Bestandteilen der Zusammensetzung, die ein ähnliches oder gleiches spezifisches Gewicht aufweisen. Jede Bewegungsachse für sich kann linear verlaufen, so dass die nicht-lineare Bewegung des Behälters aus der Überlagerung der Bewegungen entlang zweier Bewegungsachsen erzeugt wird.

Bevorzugt weist der Behälter einen unteren Deckel auf, der zu öffnen bzw. von dem Innenvolumen wegzubewegen ist, um das Innenvolumen zum Entnehmen bzw. Herausfallenlassen der Masse nach der Hin- und Herbewegung öffnen zu können. Weiter bevorzugt weist der Behälter einen oberen Deckel auf, der von dem Innenvolumen wegzubewegen ist, um das Innenvolumen zum Einfüllen der Bestandteile der anfänglichen Zusammensetzung öffnen zu können. Auf diese Weise kann der Behälter für ein satzweises Verfahren nach Öffnen des oberen Deckels befüllt werden, mit anschließendem Schließen des Innenvolumens mittels des oberen Deckels, und nach der Hin- und Herbewegung Öffnen eines unteren Deckels zum Herausfallenlassen der Masse. Solche zu öffnenden oberen und unteren Deckel können durch nur einen Deckel gebildet werden, wenn der Behälter von einer ersten Stellung, in der der eine Deckel oberhalb des Innenvolumens angeordnet ist, in eine zweite Stellung, in der dieser Deckel unterhalb des Innenvolumens angeordnet ist, bewegt wird, und die gegenüberliegende Querschnittsöffnung des Behälters von einem festen Deckel geschlossen ist.

Optional ist der Behälter temperiert, insbesondere gekühlt. Der Behälter kann dadurch gekühlt sein, dass er in einem gekühlten Gehäuse angeordnet ist, oder dass er einen Doppelmantel aufweist, der mit einem Kühlmittel durchströmbar ist.

Generell kann der Behälter einen dreieckigen oder viereckigen, wahlweise vieleckigen Querschnitt aufweisen, der an einem Ende von einem ersten Deckel und einem am gegenüberliegenden Ende angeordneten zweiten Deckel verschließbar ist. Der Behälter kann so angeordnet sein, dass einer der Deckel oberhalb des anderen Deckels angeordnet ist, vorzugsweise ist der Behälter mit seinem Querschnitt parallel zur Horizontalen angeordnet. Bevorzugt weist der Behälter einen ovalen oder runden Querschnitt auf, dessen endständige Öffnungen mit Deckeln überdeckt sind, die gewölbt oder eben sein können. Bevorzugt umfasst der Behälter ein zylindrisches Innenvolumen.

Die Bewegung entlang zweier Achsen, bzw. die Hin- und Herbewegung, kann durch einen Antriebsmotor angetrieben sein, wobei die unterschiedlichen Frequenzen der Bewegungen entlang der Achsen z.B. mittels einer Kulissenführung, eines exzentrischen Antriebs und/oder mittels eines Getriebes erfolgt. Alternativ kann die Hin- und Herbewegung durch zwei gesteuerte Antriebsmotoren angetrieben sein. Ein Antriebsmotor kann ein Linearantrieb sein, z.B. ein elektrischer oder hydraulischer bzw. pneumatischer linear wirkender Antrieb, oder ein Rotationsmotor.

Generell bevorzugt erfolgt die Bewegung des Behälters mit einer Beschleunigung von 3,5 bis 350 m/s², z.B. zumindest 60 m/s², bevorzugt zumindest 100 m/s² oder 150 m/s² oder zumindest 160 m/s² oder zumindest 200 m/s², z.B. bis 260 m/s² oder bis 250 m/s², z.B. im Bereich von 160 bis 260 m/s² oder von 200 bis 250 m/s², jeweils entlang einer der Achsen, bevorzugt entlang jeder Achse und generell bevorzugt in Kombination mit der Beschleunigung mit einer mittleren Geschwindigkeit von zumindest 0,5 m/s, bevorzugt zumindest 2 m/s, bevorzugter zumindest 3,5 m/s, z.B. bis 10 m/s oder bis 6 m/s, z.B. 3 bis 4 m/s, jeweils entlang einer der Achsen, bevorzugt entlang jeder Achse. Dabei ist der Weg der Bewegung entlang zumindest einer Achse, bevorzugt entlang jeder Achse z.B. 12 bis 24 cm.

Zur Erzeugung einer Rollbewegung weist der Behälter z.B. einen zumindest drei- oder viereckigen, bevorzugter fünf- bis achteckigen, symmetrischen oder nicht symmetrischen Querschnitt auf, bevorzugt einen ovalen oder runden Querschnitt und die Hin- und Herbewegung entlang der Bewegungsachsen erfolgt in einer Ebene, die z.B. etwa parallel bis in einem kleinen Winkel, z.B. von max. 20° zu diesem Querschnitt verläuft. Bevorzugt verläuft die Ebene parallel zur Horizontalen. Dabei kann die Hin- und Herbewegung dadurch zu einer Rollbewegung eingestellt werden, dass die Phasenlage der Bewegung entlang der Achsen verändert wird. Entsprechend kann optional über die Dauer der Hin- und Herbewegung die Frequenz der Bewegung entlang jeder Achse verändert werden und/oder die Phasenlage der Bewegung entlang der Achsen verändert werden.

In einem geschlossenen Behälter kann durch eine Unterfüllung (z.B. Füllung zu 50 bis 95%, z.B. zu 80 bis 90%) des Behältervolumens mit der anfänglichen Zusammensetzung ein rundes Produkt erzeugt werden, indem die Hin- und Herbewegung entlang einer niederfrequenten Lissajousfigur ist. Daher kann die Hin- und Herbewegung optional einen zeitlichen Anteil aufweisen, in dem die Hin- und Herbewegung entlang einer niederfrequenten Lissajousfigur ist, z.B. mit einer Frequenz von maximal 15 Hz entlang jeder Achse.

Optional wird die Masse nicht aus dem Behälter entleert, sondern der Behälter selbst bildet eine Form zu Aushärten der Masse, insbesondere wird die darin erzeugte Masse in dem Behälter durch Erwärmen bzw. Backen gehärtet. In dieser Ausführungsform eignet sich das Verfahren z.B. zum Backen von Figuren aus einer anfänglichen Zusammensetzung mit einem hohen Gehalt an Zucker und/oder Zuckeralkohol und z.B. Kakao bzw. Schokolade. Die homogene Masse kann eine Lebensmittelmasse sein, z.B. eine Zuckermischung, optional geschmolzen und/oder mit einem Gehalt an Lösungswasser, Karamell oder Schokolade, oder ein Teig auf Basis von Stärke und/oder Protein, bevorzugt jeweils mit einem Gehalt an Wasser und/oder Fett.

Generell kann die Hin- und Herbewegung entlang einer oder beider Achsen optional einen zeitlichen Anteil enthalten, vorzugsweise gegen Ende der Hin- und Herbewegung, in der die Bewegung entlang einer oder beider Achsen mit einer Frequenz abläuft, die eine Rollbewegung der Masse in dem Behälter begünstigt, und die bevorzugt eine niederfrequente Lissajous-Figur ergeben. Solche Bewegungen entlang niederfrequenter Lissajous-Figuren können jeweils dieselbe Frequenz entlang jeder der Achsen der Bewegung aufweisen und eine Phasenlage zueinander von 80 bis 100 °, bevorzugt von 90° zueinander, um z.B. eine ovale oder kreisförmige Bewegung zu erzeugen.

Bevorzugt weist der Behälter an seinem ersten Ende zumindest eine Einlassleitung auf, durch die zumindest ein Bestandteil der anfänglichen Zusammensetzung, optional alle Bestandteile der anfänglichen Zusammensetzung, in den Behälter gefüllt werden, und am gegenüberliegenden zweiten Ende eine Auslassleitung, durch die nach der Hin- und Herbewegung die Masse aus dem Behälter entnommen werden kann, z.B. durch die Schwerkraft aus dem Behälter fallen kann. Anstelle einer Auslassleitung kann das Entnehmen der Masse durch eine in einem Abstand unterhalb des Behälters angeordnete Auffangeinrichtung erfolgen, die z.B. eine Schüssel oder ein Förderband ist. Die Einlassleitung und/oder die Auslassleitung können jeweils unabhängig voneinander aus einem elastischen Schlauch bestehen oder aus einem Rohr, das zumindest 2 Gelenke und dazwischen einen in der Länge veränderlichen Abschnitt aufweist. Ein Gelenk eines Rohrs kann z.B. aus zwei aneinander verschieblich und/oder verdrehbar angeordneten konzentrischen Hohlkugelsegmenten bestehen, von denen jedes an einem Rohrabschnitt angeschlossen ist. Ein in der Länge veränderlicher Abschnitt eines Rohrs kann durch zwei ineinander längsverschieblich angeordnete Rohrabschnitten ausgebildet sein.

Dabei kann zwischen Einlassleitung und Behälter und/oder zwischen Behälter und Auslass bzw. Auslassleitung jeweils ein Deckel angeordnet sein, die nach Dosieren der anfänglichen Zusammensetzung in den Behälter diesen verschließen, wobei nach der Hin- und Herbewegung der Deckel geöffnet wird, der am Auslass bzw. an der Auslassleitung angeordnet ist, um die Masse zu entnehmen, dann dieser Deckel wieder geschlossen wird und der Deckel, der an der Einlassleitung angeordnet ist, geöffnet wird und neue anfängliche Zusammensetzung in den Behälter dosiert wird. Auf diese Weise kann das Verfahren satzweise durchgeführt werden.

Alternativ kann die anfängliche Zusammensetzung kontinuierlich oder satzweise in den Behälter dosiert werden, z.B. während der Hin- und Herbewegung oder während einer Unterbrechung der Hin- und Herbewegung, und durch den Auslass bzw. die Auslassleitung kann die Masse kontinuierlich oder satzweise entnommen werden. Generell, und in dieser Ausführungsform bevorzugt, wird die anfängliche Zusammensetzung kontinuierlich oder satzweise mittels einer ersten Fördereinrichtung in den Behälter dosiert und die Masse mittels einer zweiten Fördereinrichtung kontinuierlich oder satzweise durch den Auslass bzw. die Auslassleitung entnommen. Die Fördereinrichtung kann jeweils unabhängig eine Verdränger- oder Strömungspumpe sein, z.B. eine Zahnradpumpe, eine Förderschnecke, eine Kreiselpumpe oder eine Drehkolbenpumpe sein. Die erste Fördereinrichtung ist z.B. an einer mit dem Behälter verbundenen Einlassleitung angeschlossen.

Es hat sich gezeigt, dass ein Teig auf Mehlbasis als Masse, die mit dem Verfahren hergestellt wird, jedenfalls bei einer Viskosität wie sie Hefeteig oder Brotteig aufweist, eine zusammenhängende Masse bildet, die nicht am Behälter klebt, sondern im Wesentlichen vollständig als ein Teigklumpen aus dem Behälter entnommen bzw. aus dem Behälter herausfallen gelassen werden kann. Dabei ist zumindest die Innenwand des Behälters aus lebensmittelgeeignetem Kunststoff, aus Aluminium, bevorzugt aus Edelstahl. Die Bestandteile der anfänglichen Zusammensetzung, die in der Masse die homogene bzw. kontinuierliche Phase bilden, umfassen bevorzugt zumindest ein Polymer, das bevorzugt ein natürliches Polymer ist, z.B. Stärke, insbesondere Mehl, z.B. aus Getreide oder Mais, bevorzugt mit Protein, das insbesondere pflanzliches Protein ist, z.B. Gluten, sowie zumindest einen weiteren Bestandteil, wobei zumindest einer von Polymer und weiterem Bestandteil flüssig ist. Der weitere Bestandteil kann z.B. Wasser und/oder ein Fett sein, das bei der Temperatur fließfähig ist, bei der das Verfahren ausgeführt wird, z.B. bei einer Temperatur von 5 bis 90°C oder darüber.

Das Polymer kann optional in Form von natürlichen oder synthetischen Monomeren oder Oligomeren, die optional polymerisierbar sind, bevorzugt mit zugesetztem Polymerisationsstarter und/oder Vernetzungsmittel, in der Mischung enthalten sein oder daraus bestehen oder ein natürliches oder synthetisches Polymer sein, das optional vernetzbar und/oder thermoplastisch ist, z.B. ein Kunststoffpolymer. Eine anfängliche Zusammensetzung mit polymerisierbaren natürlichen Monomeren und Oligomeren kann z.B. eine Mischung aus Zucker und/oder Zuckeralkohol, Protein und/oder Stärke mit Wasser und/oder Fett sein, die durch Erwärmung härtbar ist. Ein Polymer, das ein thermoplastisches Polymer ist, hat bevorzugt eine Temperatur oberhalb seiner Erweichungstemperatur und ist flüssig.

Bevorzugt enthält die anfängliche Zusammensetzung in Kombination mit synthetischen Monomeren, die optional polymerisierbare Monomere und/oder vernetzbare Polymere sind, zusätzlich inerte Füllstoffe, Verarbeitungshilfsmittel, Farbstoff, Polymerisationsstarter und Beschleuniger, jedes optional in Pulverform oder flüssig, und/oder ein zweites fließfähiges synthetisches oder natürliches Polymer oder besteht daraus. Die daraus hergestellte Masse kann eine härtbare oder selbsthärtende Kunststoffmischung sein, z.B. eine zu Epoxyharz oder Polyurethan härtende anfängliche Zusammensetzung.

Das natürliche Polymer ist bevorzugt Stärke, z.B. Mehl aus Getreide, Mais, Hülsenfrüchten oder Wurzeln, das pflanzliches Protein enthält, z.B. den natürlichen Gehalt des Mehls an Protein oder zugesetztes Protein, z.B. Gluten, isoliertes Protein aus Hülsenfrüchten, tierisches Protein, z.B. Molkeprotein, oder proteinfreies bzw. glutenfreies Mehl, dem optional isoliertes Protein aus Hülsenfrüchten und/oder tierisches Protein zugesetzt ist, oder eine Mischung aus zumindest zweien dieser oder besteht daraus.

Die homogene kontinuierliche Phase der Masse weist bevorzugt eine Viskosität von zumindest 10 Pas, bevorzugter von zumindest 50 Pas oder zumindest 100 Pas oder zumindest 300 Pas oder zumindest 1000 Pas auf, z.B. bis maximal 10000 Pas, gemessen bei einer Scherrate von 1/s in einem Rotationsviskosimeter oder einem Drehscheibenviskosimeter bei 20°C.

Es hat sich gezeigt, dass mit dem Verfahren aus zumindest einem natürlichen Polymer, das pulverförmig sein kann, und einem flüssigen anfänglichen Bestandteil, z.B. Wasser, oder aus zumindest zwei Flüssigkeiten, in kurzer Zeit eine homogene kontinuierliche Phase hergestellt wird, die die Masse, die optional darin verteilte Stücke und/oder Gasblasen enthält, vollständig durchzieht und/oder bildet. Dabei weist die homogene Phase bevorzugt eine höhere Viskosität auf, als jeder der Bestandteile der anfänglichen Zusammensetzung allein.

Optional wird der Behälter nach dem Dosieren der anfänglichen Zusammensetzung verschlossen und mit Druckgas beaufschlagt, z.B. mittels einer Einlassleitung für Druckgas, die am Behälter angeschlossen ist und mit einer Druckgasquelle verbunden ist. Die Druckgasquelle kann direkt am Behälter angebracht sein, z.B. mit einem Ventil in der Einlassleitung, um eine Bewegung der Einlassleitung für Druckgas zu vermeiden.

### Beispiel 1: Herstellen von Hefeteig oder Sauerteig

In einen zylindrischen Behälter aus Edelstahl mit einem Innenvolumen von 5 L wurden als anfängliche Zusammensetzung 2 kg einer Backmischung für Hefeteig (97 Gew.-% Weizenmehl, Trockenhefe, Salz) als Polymer und 0,2 kg Wasser als zweiter Bestandteil, sowie 0,1 kg Pflanzenöl, jeweils bei Raumtemperatur, dosiert. Der Behälter wurde für 30 s entlang einer ersten Achse über einen Weg von 12 cm mit einer Frequenz von 6,8 Hz und entlang einer dazu senkrechten zweiten Achse über einen Weg von ebenfalls 12 cm mit einer Frequenz von 6,15 Hz in einer Hin- und Herbewegung bewegt. Der Querschnitt des zylindrischen Behälters war parallel zur Horizontalen geführt, die endständigen Querschnitte waren verschlossen. Nach dieser Zeit der Hin- und Herbewegung war ein homogener Teig als Masse hergestellt, die sich ohne weiteres aus dem Behälter entnehmen ließ. An der Behälterinnenwand wurden im Wesentlichen keine haftenden Teigreste beobachtet, z.B. maximal 10 % oder maximal 5 % bis maximal 2 % des Teigs. Der Teig wies einer um ca. 8 °C höhere Temperatur auf, als die anfängliche Zusammensetzung. Nach einer Gärphase, in der die Hefe Gasblasen bildete, wurde der Teig gebacken.

### Beispiel 2: Herstellen einer selbsthärtenden Masse mit reaktiven Harzbestandteilen

Als anfängliche Zusammensetzung für eine Masse, die zu Epoxidharz aushärtet, wurden 100 Gewichtsteile mit Bisphenol A/F reaktiv verdünntes Epoxidharz, 100 Gewichtsteile Quarzsand, 1 Gewichtsteil Farbpigment, 21 Gewichtsteile einer Härterzusammensetzung aus einem Diamin, Epoxidharz und Nonylphenol in einen dicht verschließbaren zylindrischen Kunststoffbecher dosiert, dieser wurde evakuiert, verschlossen und in einen passenden Behälter aus Edelstahl gesetzt und darin arretiert. Der Behälter wurde für 20 s entlang einer ersten Achse über einen Weg von 12 cm mit einer Frequenz von 6 Hz und entlang einer dazu senkrechten zweiten Achse über einen Weg von 5 cm mit einer Frequenz von 5 Hz in einer Hin- und Herbewegung bewegt. Der Querschnitt des zylindrischen Behälters war parallel zur Horizontalen geführt. Nach dieser Zeit der Hin- und Herbewegung war die Masse homogen und die reaktiven Bestandteile der anfänglichen Zusammensetzung polymerisierten zu einer homogenen durchgehenden Phase, in der der Quarzsand enthalten war.

## Patentansprüche

1. Verfahren zur Herstellung einer Masse, die eine durchgehende homogene Phase aufweist, aus einer anfänglichen Zusammensetzung, das die Schritte umfasst
- Dosieren der Bestandteile der anfänglichen Zusammensetzung für die Masse in einen Behälter,
- wobei homogene Phase aus den Bestandteilen der anfänglichen Zusammensetzung erzeugt wird, die
zumindest ein Polymer und einen weiteren Bestandteil, wobei zumindest eines von Polymer und dem weiteren Bestandteil flüssig ist,
umfassen oder daraus bestehen,
- Bewegen des Behälters in einer Hin- und Herbewegung mit einer Frequenz von zumindest 1 Hz entlang zweier Achsen mit jeweils unterschiedlicher Frequenz über einen Weg entlang jeder Achse von zumindest 1 cm zur Herstellung einer Masse, die die homogene Phase mit optional darin verteilten Stücken und/oder Gasblasen aufweist,
- Entnehmen der Masse aus dem Behälter,
- wobei der Masse optional in der homogenen Phase verteilbare Stücke zugesetzt werden und/oder die Masse in der homogenen Phase verteilte Gasblasen aufweist.

2. Verfahren nach Anspruch 1, **dadurch gekennzeichnet, dass** das zumindest eine Polymer Stärke und/oder pflanzliches Protein ist und der zumindest eine weitere Bestandteil Wasser ist und die anfängliche Zusammensetzung Speisesalz, optional Backhilfsmittel und/oder Treibmittel enthält.

3. Verfahren nach einem der voranstehenden Ansprüche, **dadurch gekennzeichnet, dass** der Behälter vor dem Bewegen mit Druckgas beaufschlagt und verschlossen wird.

4. Verfahren nach einem der voranstehenden Ansprüche, **dadurch gekennzeichnet, dass** die anfängliche Zusammensetzung durch zumindest eine mit dem Behälter verbundene Einlassleitung in den Behälter dosiert wird.

5. Verfahren nach einem der voranstehenden Ansprüche, **dadurch gekennzeichnet, dass** der Behälter einen unteren Deckel aufweist, der zum Entnehmen der Masse von dem Innenvolumen wegbewegt wird, und einen oberen Deckel, der zum Dosieren der Bestandteile der anfänglichen Zusammensetzung von dem Innenvolumen wegbewegt wird.

6. Verfahren nach einem der voranstehenden Ansprüche, **dadurch gekennzeichnet, dass** das Dosieren der Bestandteile der anfänglichen Zusammensetzung durch eine mit dem Behälter verbundene Einlassleitung und das Entnehmen der Masse kontinuierlich oder satzweise erfolgen.

7. Verfahren nach Anspruch 6, **dadurch gekennzeichnet, dass** die Hin- und Herbewegung des Behälters kontinuierlich abläuft.

8. Verfahren nach einem der voranstehenden Ansprüche, **dadurch gekennzeichnet, dass** das Bewegen des Behälters entlang einer Lissajous-Figur erfolgt.

9. Verfahren nach einem der voranstehenden Ansprüche, **dadurch gekennzeichnet, dass** das Bewegen des Behälters für maximal 600 s oder maximal 60 s erfolgt und dass die Bewegung entlang jeder Achse über einen Weg von zumindest 10 cm erfolgt.

10. Verfahren nach einem der voranstehenden Ansprüche, **dadurch gekennzeichnet, dass** das Bewegen des Behälters entlang zweier Achsen erfolgt, die in einer Ebene angeordnet sind, und dass der Behälter ein Zylinder ist, dessen Querschnitt in dieser Ebene angeordnet ist.

11. Verfahren nach einem der voranstehenden Ansprüche, **dadurch gekennzeichnet, dass** das Polymer in Form von polymerisierbarer natürlicher oder synthetischer Monomeren oder Oligomeren mit zugesetztem Polymerisationsstarter oder als zumindest ein synthetisches vernetzbares und/oder thermoplastisches Polymer vorliegt.

12. Verfahren nach einem der voranstehenden Ansprüche, **dadurch gekennzeichnet, dass** die Bewegung entlang jeder Achse mit einer Beschleunigung von 3,5 bis 350 m/s² erfolgt.

13. Verfahren nach einem der voranstehenden Ansprüche, **gekennzeichnet durch** das Formen der Masse nach dem Entnehmen der Masse aus dem Behälter, optional anschließendes Härten der Masse, insbesondere durch Erwärmen.

14. Verfahren nach einem der voranstehenden Ansprüche, **dadurch gekennzeichnet, dass** die Bewegung entlang jeder Achse mit einer mittleren Geschwindigkeit von 0,5 bis 10 m/s erfolgt.

15. Verfahren nach einem der voranstehenden Ansprüche, **dadurch gekennzeichnet, dass** keine Stücke zugesetzt werden, dass die Masse zu zumindest 70 Vol.-% aus der homogenen Phase besteht, die aus den Bestandteilen der anfänglichen Zusammensetzung besteht und in dem Behälter Gas zugesetzt wird, um das Restvolumen der Masse, das unmittelbar nach Entnahme aus dem Behälter vorliegt, durch Gasblasen zu bilden.
